# EUROPÄISCHE PATENTSCHRIFT

(11) **EP 1 198 374 B1**
(45) Veröffentlichungstag und Bekanntmachung des Hinweises auf die Patenterteilung: **12.04.2006**
(21) Anmeldenummer: 00962175.6
(22) Anmeldetag: 31.07.2000
(51) Int. Cl.: B60T 7/10, B60T 13/74, B60T 7/04

(54) **BREMSANLAGE FÜR EIN KRAFTFAHRZEUG**
BRAKE SYSTEM FOR A MOTOR VEHICLE
SYSTEME DE FREINAGE POUR UN VEHICULE A MOTEUR

(30) Priorität: 30.07.1999 DE 19935999
(43) Veröffentlichungstag der Anmeldung: 24.04.2002
(73) Patentinhaber: SIEMENS AKTIENGESELLSCHAFT, 80333 München (DE)
(72) Erfinder: DEML, Ulrich, 93138 Lappersdorf (DE)
(74) Vertreter: Vossius, Volker
(86) Internationale Anmeldenummer: PCT/DE2000/002519
(87) Internationale Veröffentlichungsnummer: WO 2001/008951

(56) Entgegenhaltungen:
- WO-A-99/38738
- WO-A-99/50111
- DE-U- 29 901 871

## Beschreibung

Die Erfindung betrifft eine Bremsanlage für ein Kraftfahrzeug, bei der ein Dosieren des Bremsmoments bei während der Fahrt aktivierter Feststellbremsfunktion möglich ist.

Feststellbremsanlagen für Kraftfahrzeuge müssen zwei grundlegende, vom Gesetzgeber vorgeschriebene Grundanforderungen erfüllen. Zum einen muß eine unabhängige Betätigung vorgesehen sein, die ein Kraftfahrzeug an einer 20 prozentigen Steigung sicher halten kann (Funktion einer Parkbremse). Zum anderen muß die Feststellbremse für den Fall eines Ausfalls der Betriebsbremse in der Lage sein, das Kraftfahrzeug aus einer Geschwindigkeit von maximal 30 km/h mit einer mittleren Verzögerung von 1,5 m/s² abzubremsen (Funktion einer Hilfsbremse).

Bei konventionellen Kraftfahrzeugen ist im Bereich der Mittelkonsole ein Handbremshebel angeordnet, der über einen Seilzug mit den Bremsen, üblicherweise der Hinterräder, verbunden ist; bekannt ist auch ein Fußbremshebel im Pedalbereich. Abhängig von Betätigungen des Hand- oder Fußbremshebels werden die Bremsen an den entsprechenden Rädern zugespannt. Derartige Feststellbremsanlagen bieten die Möglichkeit, das Bremsmoment an den Rädern über die Kraft und die Geschwindigkeit des Betätigens des Bremshebels zeitlich so exakt zu dosieren, daß Fahrmanöver, wie die "Handbremswende" möglich sind. Die Fahrbarkeit solcher Manöver wird von Seiten der Automobilhersteller für Sonderfahrzeuge, wie beispielsweise Politikerfahrzeuge, zwingend vorgeschrieben. Der große Nachteil einer Betätigung der Feststellbremsanlage über einen Hand- oder Fußbremshebel ist der Platzbedarf des Bremshebels im Bereich der Mittelkonsole beziehungsweise im Pedalbereich.

Die bei Kraftfahrzeugen heutzutage zunehmenden Anforderungen an ein modernes Bremssystem - zum Beispiel Antiblockiereinrichtungen, Fahrstabilitätsregelungen, Antriebsschlupfsteuerungen oder Traktionskontrollen - machen radselektive Bremseingriffe erforderlich und haben zur Entwicklung elektromechanischer oder elektrohydraulischer Bremssysteme (brake by wire) geführt. Dabei wird die vom Fahrer ausgehende Bremsmomentanforderung nicht mehr direkt als Kraft über ein hydraulisches System übertragen, sondern nur noch als Signal über eine elektrische Leitung. Mit Hilfe dieses Signals wird ein elektrischer Bremsaktuator gesteuert, der mit einer elektrischen Energieversorgung eine Kraft an einer Bremse erzeugt, welche über ein Reibelelement das gewünschte Bremsmoment bewirkt. Im Falle einer Scheibenbremse wird die das Bremsmoment erzeugende Bremskraft als Zuspannkraft bezeichnet.

Die Bremsaktuatoren einer derartigen Betriebsbremse können zugleich als Aktuatoren für die Feststellbremsanlage verwendet werden. Dafür sind insbesondere Bremsaktuatoren mit Spindelgetriebe geeignet. Eine Bremsanlage mit derartigen Bremsaktuatoren ist beispielsweise aus der Druckschrift DE 196 15 186 C1 bekannt.

Eine Bremsanlage gemäß dem Oberbegriff des Anspruchs 1 ist aus dem Gebrauchmuster DE 299 01 871 U1 bekannt.

Aus der Veröffentlichung "Schwer auf Draht - Knopfdruck genügt", Klaus-Ulrich Blumenstock, mot Nr. 18/1998, ist es bekannt, eine elektrische Feststellbremse über einen Schalter, zum Beispiel im Bereich des Armaturenbretts, zu betätigen. Durch den Wegfall eines Hand- oder Fußbremshebels wird auf diese Weise erheblicher Einbauraum im Fahrzeug eingespart. Da die von der Feststellbremsanlage angesprochenen Bremsen - üblicherweise an den Hinterrädern - bei Betätigen des Schalters aber nach einer fest vorgegebenen Zeitfunktion zugespannt werden, geht die Dosierbarkeit der Zuspannkräfte durch den Fahrer bei derartigen Systemen verloren. Spezielle Fahrmanöver, wie zum Beispiel die "Handbremswende", sind nicht mehr möglich.

Der Erfindung liegt das technische Problem zugrunde, eine Bremsanlage zu schaffen, die eine elektrisch aktivierbare Feststellbremsfunktion aufweist, bei der das Bremsmoment ohne zusätzlichen Hardware-Aufwand zeitlich exakt dosierbar ist.

Diese Aufgabe wird erfindungsgemäß durch eine Bremsanlage mit den Merkmalen des Anspruchs 1 gelöst. Zweckmäßige Weiterbildungen der Erfindung sind in den Unteransprüchen niedergelegt.

Die Feststellbremsfunktion wird durch Betätigen eines Schaltelements - im folgenden kurz als FBA-Schalter bezeichnet - aktiviert. Dabei ist das Schaltelement beispielsweise als Druckknopf, Tast- oder Kippschalter ausgebildet und vorzugsweise im Bereich des Armaturenbretts oder des Lenkrads angeordnet. Erfindungsgemäß wird dem Fahrer bei Verwendung der Festellbremse als Hilfsbremsanlage, also bei Betätigen des FBA-Schalters während der Fahrt, die Möglichkeit gegeben, das Bremsmoment über das Bremspedal, das üblicherweise nur zum Aktivieren der Betriebsbremse dient, zu dosieren. Dabei wird das Bremsmoment der Feststellbremse abhängig vom Pedalweg und/oder von der Betätigungskraft des Bremspedals gesteuert.

Die Vorteile der Erfindung liegen vor allem darin, daß durch den Verzicht auf einen konventionellen Hand- oder Fußbremshebel erheblicher Einbauraum im Kraftfahrzeug eingespart und dennoch die Dosierbarkeit des Bremsmoments der Feststellbremse gewährleistet wird.

Ein Ausführungsbeispiel der Erfindung wird im folgenden an Hand der Figuren erläutert. Es zeigen:
Figur 1 eine schematische Darstellung einer Bremsanlage für ein Kraftfahrzeug und
Figur 2 ein Flußdiagramm eines Verfahrens zum Betrieb einer Bremsanlage.

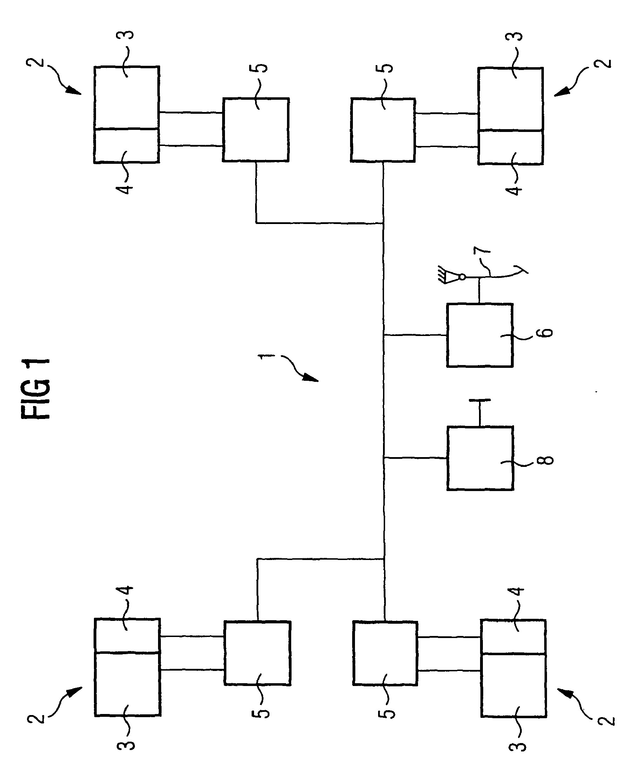

Eine Bremsanlage 1 (Figur 1) für ein Kraftfahrzeug mit vier Rädern (das hier nicht weiter dargestellt ist) enthält vier Bremsen 2, die je einen Radbremsaktuator 3 und eine Halteeinrichtung 4 einschließen. Die Radbremsaktuatoren 3 sind dabei üblicherweise in je einen zugehörigen Bremssattel, der als Schwimmsattel ausgebildet ist, integriert, das heißt mit ihm zu einer Baueinheit zusammengefaßt. Über Bremsbeläge wird bei Betätigung des Radbremsaktuators 3 ein Bremsmoment auf eine Bremsscheibe ausgeübt. Der Radbremsaktuator 3 wird dabei beispielsweise durch einen Elektromotor angetrieben, dessen Läufer als Spindelmotor eines Spindelgetriebes ausgebildet ist. Aufbau und Funktionsweise derartiger Radbremsaktuatoren sind beispielsweise aus der eingangs erwähnten Druckschrift DE 196 15 186 C1 bekannt und deshalb hier nicht näher beschrieben und auch nicht in Einzelheiten dargestellt. Derartige Radbremsaktuatoren eignen sich auch zur Realisierung einer Feststellbremsfunktion.

Bei Verwendung der Feststellbremse als Parkbremse schreibt der Gesetzgeber bei Erreichen eines vorgegebenen Bremsmomentwerts eine zusätzliche mechanische Sicherung der Feststellbremse vor. Hierzu sind Halteeinrichtungen 4, zum Beispiel elektromechanische Halteeinrichtungen, wie sie aus der DE 198 00 641 A1 bekannt sind, vorgesehen.

Jeder Bremse 2 ist ein Steuergerät 5 zugeordnet. Ein Pedalwertgeber 6, der durch das Bremspedal 7 des Kraftfahrzeugs betätigt wird, ist mit verschiedenen Sensoren, zum Beispiel Kraft- und/oder Wegsensoren, ausgestattet. Der Pedalwertgeber 6 setzt Betätigungen des Bremspedals 7, das heißt die von dem Fahrer ausgeübte Betätigungskraft und/oder den Pedalweg in elektrische Bremssignale um, die den Steuergeräten 5 zugeführt werden. Aus den Bremssignalen werden in den Steuergeräten 5 Sollgrößen, insbesondere für das auf die Bremsscheiben aufzubringende Dreh- oder Bremsmoment, bestimmt und in Form von Steuersignalen an die Radbremsaktuatoren 3 übermittelt.

Dem Steuergerät 5 werden von dem zugehörigen Radbremsaktuator 3 Rückmeldegrößen, zum Beispiel über die Motordrehzahl, den Motordrehwinkel oder die Anpreßkraft der Bremsbeläge, übermittelt. Zum Berechnen der Sollgrößen bei einem Eingriff von Antiblockier- oder Fahrstabilitätsregelungen werden von den Steuergeräten 5 weitere Sensorsignale, z. B. die Querbeschleunigung oder die Gierwinkelgeschwindigkeit und die Raddrehzahlen, ausgewertet.

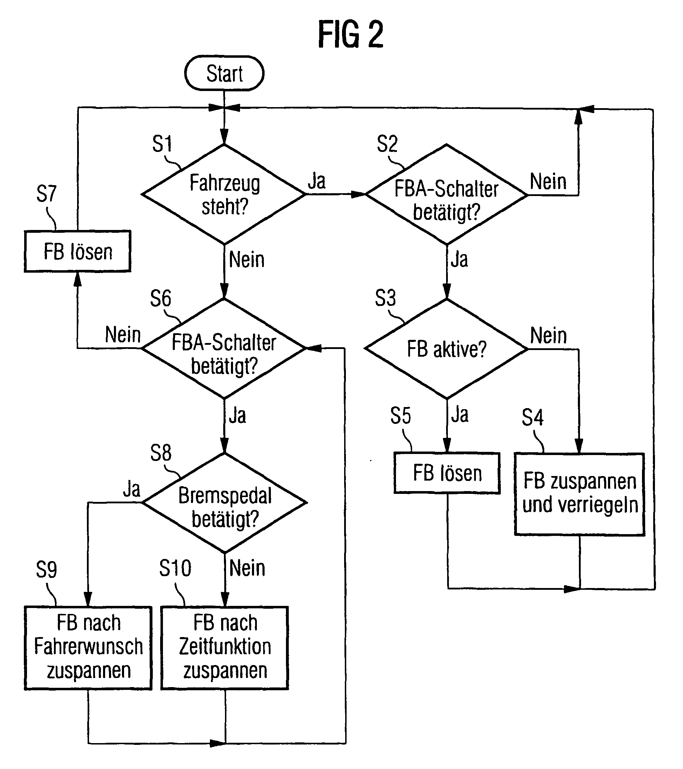

Ein FBA-Schalter 8 zum Aktivieren der Feststellbremsfunktion, der vorzugsweise so ausgestaltet ist, daß er nur eine stabile Schalterstellung aufweist, ist leitend, vorzugsweise elektrisch leitend, zumindest mit denjenigen Steuergeräten 5 verbunden, die einer Bremse 2 mit einer Halteeinrichtung 4 zugeordnet sind. Die Halteeinrichtungen 4 können, wie in der Figur dargestellt, an allen vier Rädern oder auch nur an den Rädern einer Achse, insbesondere der Hinterachse, vorgesehen sein. Auch die Halteeinrichtungen 4 werden über die Steuergeräte 5 gesteuert. Die genaue Funktionsweise der Feststellbremsfunktion wird im folgenden anhand der Figur 2 erläutert.

Der Aufbau der Bremsanlage in Figur 1 ist lediglich beispielhaft. Insbesondere die Funktionalität und die Anordnung der Steuergeräte 5 kann vielfältig variiert werden. Aus dem Stand der Technik ist eine Vielzahl von elektrischen Bremssystemen mit unterschiedlichen Anordnungen und Funktionsumfängen der Steuergeräte bekannt. Beispielhaft sei hier auf eine Anordnung, wie sie aus der Druckschrift DE 196 15 186 C1 bekannt ist, verwiesen. Ebenso ist es denkbar, alle Steuerungsfunktionen in einem einzigen zentralen Steuergerät zu realisieren.

In Figur 2 ist ein Flußdiagramm eines Verfahrens zum Betrieb einer erfindungsgemäßen Bremsanlage dargestellt. Da sich die Funktionsweise der Feststellbremsanalge bei Verwendung als Parkbremse (im Stillstand) und als Hilfsbremse (während der Fahrt) unterscheidet, wird in einem Schritt S1 zunächst überprüft, ob sich das Fahrzeug in Bewegung oder im Stillstand befindet. Hierzu werden beispielsweise Ausgangssignale von Raddrehzahlsensoren, die vorteilhaft unmittelbar an den Rädern angeordnet sind, von den Steuergeräten 5 ausgewertet. Wird in diesem Verfahrensschritt ein Stillstand des Kraftfahrzeugs festgestellt, zum Beispiel weil die Raddrehzahlen an allen vier Rädern unterhalb eines vorgegebenen Drehzahl-Grenzwertes liegen, so führt eine Betätigung des FBA-Schalters 8 (Schritt S2) unabhängig von der Betätigungsdauer in Abhängigkeit vom momentanen Betriebszustand der Feststellbremse entweder zum sofortigen Zuspannen oder zum sofortigen Lösen der Feststellbremse (FB). Wird in einem Schritt S3 festgestellt, daß die Feststellbremsfunktion momentan nicht aktiv ist, so wird von den Steuergeräten 5 unmittelbar nach Betätigen des FBA-Schalters 8 ein Steuersignal an die Radbremsaktuatoren 3 übermittelt, das zum sofortigen Zuspannen der Bremse auf eine vorgegebene maximale Zuspannkraft führt. Wird den Steuergeräten 5 zurückgemeldet, daß dieser maximale Zuspannwert erreicht ist, werden Steuersignale an die Halteeinrichtungen 4 übermittelt, so daß die Feststellbremse mechanisch sicher verriegelt wird (Schritt S4). Die maximale Zuspannkraft wird dabei derart festgelegt, daß das Fahrzeug auch an einer Steigung und auch bei auskühlenden Bremsen sicher gehalten wird.

Wird im Schritt S3 dagegen festgestellt, daß die Feststellbremsfunktion bereits aktiviert wurde, der FBA-Schalter 8 also bereits betätigt wurde, so führt ein weiteres Betätigen des FBA-Schalters 8 zum sofortigen Lösen der Feststellbremse (Schritt S5). Auch hierzu werden unmittelbar nach dem Betätigen des FBA-Schalters 8 entsprechende Steuersignale an die Halteeinrichtungen 4 und die Radbremsaktuatoren 3 übermittelt. Ein Dosieren des Bremsmoments der Feststellbremsanlage ist bei stehendem Fahrzeug nicht zweckdienlich und daher auch nicht vorgesehen.

Wird in einem Schritt S6 ein Betätigen des FBA-Schalters 8 während der Fahrt (Schritt S1) festgestellt, so werden die Bremsen im Gegensatz zur Feststellbremsfunktion bei stehendem Fahrzeug nicht sofort auf den maximalen Zuspannwert zugespannt, sondern abhängig von der Betätigungsdauer kontinuierlich zugespannt. Wird der FBA-Schalter 8 wieder in seine, vorzugsweise einzig stabile, Ausgangsstellung zurückversetzt, also zum Beispiel ein entsprechender Tastschalter wieder losgelassen, so wird die Feststellbremse unabhängig vom erreichten Zuspanngrad sofort gelöst (Schritt S7) und die Feststellbremsfunktion deaktiviert.

Über Betätigungen des Bremspedals 7, das bei herkömmlichen Fahrzeugen lediglich zum Aktivieren der Betriebsbremse dient, hat der Fahrer die Möglichkeit, die Bremswirkung der Feststellbremse zu dosieren, das heißt die Kraft und die Geschwindigkeit des Zuspannens zu beeinflussen. Ist der FBA-Schalter 8 betätigt (Schritt S6) und wird in einem Schritt S8 ein Betätigen des Bremspedals 7 erkannt, so wird die Feststellbremse abhängig von der Stellung und/oder der Druckkraft des Bremspedals 7, also nach Fahrerwunsch, zugespannt (Schritt S9). Hierzu werden analog zur Betriebsbremsfunktion Betätigungen des Bremspedals 7 durch den Pedalwertgeber 6 in elektrische Bremssignale umgesetzt. Aus den Bremssignalen werden in den Steuergeräten 5 Sollgrößen bestimmt und in Form von Steuersignalen an die Radbremsaktuatoren 3 übermittelt.

Ist der FBA-Schalter 8 betätigt (Schritt S6) und wird im Schritt 58 kein Betätigen des Bremspedals 7 erkannt, so werden die Radbremsaktuatoren 3 nach einer vorgegebenen Zeitfunktion gesteuert und die Feststellbremse nach eben dieser Zeitfunktion zugespannt (Schritt S10). Ein Verriegeln der Feststellbremse über die Halteeinrichtungen 4 ist bei der Verwendung der Feststellbremse als Hilfsbremse, also bei Aktivierung der Feststellbremsfunktion während der Fahrt, nicht sinnvoll und daher nicht vorgesehen. Da die Halteeinrichtungen 4 bei Verwendung der Feststellbremse als Hilfsbremse damit keine Funktion haben, ist es auch bei Bremsanlagen, die nur an den Rädern einer Achse Haltevorrichtungen 4 aufweisen, vorteilhaft, den FBA-Schalter 8 mit allen Steuergeräten 5 elektrisch leitend zu verbinden. Auf diese Weise können bei Ausfall der Betriebsbremse alle Radbremsaktuatoren 3 zum Abbremsen des Fahrzeugs genutzt werden.

In den Steuergeräten 5 können auch Zusatzfunktionen der Feststellbremse realisiert sein. Einige Fahrer haben die Eigenart, ihren Fuß auf dem Bremspedal 7 abzulegen, ohne damit eine Bremswirkung erzielen zu wollen. Um zu verhindern, daß auch eine derartige, unbeabsichtigte Betätigung des Bremspedals 7 bei Betätigen des FBA-Schalters 8 während der Fahrt das Zuspannen der Bremsen beeinflußt, kann eine Mindestbetätigungskraft und/oder ein Mindestpedalweg des Bremspedals in Form eines Betätigungs-Grenzwerts vorgegeben werden. Solange die Betätigungskraft und/oder der Pedalweg diese(n) Grenzwert(e) nicht überschreiten, werden die Radbremsaktuatoren 3 nach der vorgegebenen Zeitfunktion gesteuert. Wird der Betätigungs-Grenzwert auf Null gesetzt, so entspricht die Funktion exakt der vorher beschriebenen Funktionsweise, das heißt die Radbremsaktuatoren 3 werden nur dann nach der vorgegebenen Zeitfunktion gesteuert, wenn das Bremspedal 7 nicht betätigt ist.

Um auch beim Dosieren der Bremswirkung der Feststellbremse über das Bremspedal 7 ein rasches Ansprechen zu gewährleisten, ist es sinnvoll, das Sollbremsmoment, das den Radbremsaktuatoren 3 von den Steuergeräten 5 in Form von Steuersignalen übermittelt wird, unmittelbar nach Überschreiten des Betätigungs-Grenzwertes sprunghaft auf einen Startwert anzuheben, der vorteilhaft eine Verzögerung im Bereich von 5% bis 10% der Vollverzögerung des Fahrzeugs bewirkt. Die Vollverzögerung des Fahrzeugs ergibt sich dabei aus den maximal möglichen physikalischen Kräften an den Rädern.

Um auch beim Dosieren der Bremswirkung der Feststellbremse über ein Betätigen des Bremspedals 7 eine gleichmäßige Verzögerung des Fahrzeugs zu ermöglichen, ist es sinnvoll, daß die Abhängigkeit der Sollverzögerung des Kraftfahrzeugs von der Betätigungskraft und/oder dem Pedalweg des Bremspedals 7 eine Hysterese aufweist. Das heißt jeder Betätigungskraft und/oder jedem Pedalweg sind zwei unterschiedliche Bremskräfte zugeordnet, je nachdem ob die Betätigungskraft und/oder der Pedalweg zunimmt oder abnimmt. Auf diese Weise wirken sich leichte Änderungen in der Betätigungskraft oder der Pedalstellung nicht auf die Sollverzögerung aus, so daß unerwünschte Schwankungen der Bremswirkung weitgehend vermieden werden.

Beim Betätigen des Bremspedals 7 zum Dosieren der Bremswirkung der Feststellbremse durch den Fahrer sind zwei grundlegende Betriebssituationen zu unterscheiden. Wird ausgehend von der momentanen Geschwindigkeit ein kontinuierliches Verzögern des Kraftfahrzeuges gewünscht, ist es aus Gründen des Fahrkomforts und des Fahrgefühls sinnvoll, den Gradienten des Sollbremsmoments auf einen Bremsmomentanstiegs-Grenzwert zu begrenzen. Es können aber auch Fahrsituationen, wie der Wunsch einer Handbremswende, auftreten, in denen der Fahrer das Bremsmoment, das die Vollverzögerung des Fahrzeugs bewirkt, in kürzest möglicher Zeit anfordert. Dabei wird das Bremspedal 7 vom Fahrer üblicherweise abrupt und mit hoher Betätigungskraft annähernd durchgedrückt (Panikbremsung). Um derartige Panikbremsungen zu detektieren, werden Betätigungen des Bremspedals 7 bei aktivierter Feststellbremse von den Steuergeräten 5 auch zeitlich analysiert. Hierzu kann beispielsweise der Gradient der Betätigungskraft oder des Pedalwegs ausgewertet werden. Überschreitet der Gradient der Betätigungskraft oder des Pedalwegs dabei einen vorgegebenen Grenzwert, so wird die Begrenzung des Gradienten des Sollbremsmoments entweder aufgehoben oder in einer geeigneten Weise verändert, zum Beispiel durch Erhöhen des Bremsmomentanstiegs-Grenzwerts. Um eine Handbremswende zu ermöglichen, ist es erforderlich, daß die Räder an der Hinterachse blokkieren, während die Räder an der Vorderachse vorzugsweise ungebremst bleiben. Aus diesem Grund ist es bei Erkennen einer Panikbremsung vorteilhaft, lediglich die Radbremsaktuatoren 6 an der Hinterachse anzusteuern und bei Kraftfahrzeugen mit Antiblockiersystem, das Antiblockiersystem außer Betrieb zu setzen.

## Patentansprüche

1. Bremsanlage für ein Kraftfahrzeug, umfassend
einen Pedalwertgeber (6) zum Erzeugen elektrischer Bremssignale abhängig von Betätigungen des Bremspedals (7),
den Rädern zugeordnete Radbremsaktuatoren (3) zum Erzeugen eines Bremsmoments an den Rädern,
ein Schaltelement (8) zum Aktivieren einer Feststellbremsfunktion und
mindestens ein Steuergerät (5) zum Steuern der Radbremsaktuatoren (3),
**dadurch gekennzeichnet, dass**
das mindestens eine Steuergerät (5) ausgestaltet ist, zumindest die Radbremsaktuatoren (3), die den Rädern an einer der Achsen des Kraftfahrzeugs zugeordnet sind, abhängig von den Bremssignalen des Pedalwertgebers (6) zu steuern, falls die Feststellbremsfunktion während der Fahrt aktiviert ist.

2. Bremsanlage nach Anspruch 1, **dadurch gekennzeichnet, dass** die Radbremsaktuatoren (3), nach einer vorgegebenen Zeitfunktion gesteuert werden, falls
die Feststellbremsfunktion während der Fahrt aktiviert ist und
die Betätigungskraft und/oder der Pedalweg am Bremspedal (7) einen vorgegebenen Betätigungs-Grenzwert nicht übersteigt.

3. Bremsanlage nach Anspruch 1, **dadurch gekennzeichnet, dass** die Radbremsaktuatoren (3) derart gesteuert werden, dass das Bremsmoment an den Rädern proportional zur Betätigungskraft und/oder zum Pedalweg des Bremspedals (7) ist, falls
die Feststellbremsfunktion während der Fahrt aktiviert ist und
die Betätigungskraft und/oder der Pedalweg am Bremspedal (7) einen vorgegebenen Betätigungs-Grenzwert übersteigt.

4. Bremsanlage nach Anspruch 1, **dadurch gekennzeichnet, dass** die Radbremsaktuatoren (3) derart gesteuert werden, dass das von dem mindestens einen Steuergerät (5) an die Radbremsaktuatoren (3) in Form von Steuersignalen übermittelte Sollbremsmoment von der Betätigungskraft und/oder dem Pedalweg des Bremspedals (7) in Form einer Hysteresekurve abhängt, falls
die Feststellbremsfunktion während der Fahrt aktiviert ist und
die Betätigungskraft und/oder der Pedalweg am Bremspedal (7) einen vorgegebenen Betätigungs-Grenzwert erreicht oder übersteigt.

5. Bremsanlage nach einem der vorhergehenden Ansprüche, **dadurch gekennzeichnet, dass** durch das mindestens eine Steuergerät (5) zeitliche Verläufe von Betätigungen des Bremspedals (7) analysiert werden.

6. Bremsanlage nach Anspruch 5, **dadurch gekennzeichnet, dass** sie ein Antiblockiersystem aufweist, das außer Betrieb gesetzt wird, wenn der Gradient der Betätigungskraft oder des Pedalwegs des Bremspedals (7) einen vorgegebenen Grenzwert überschreitet.

7. Bremsanlage nach Anspruch 5 oder 6, **dadurch gekennzeichnet,**
**dass** sowohl die Radbremsaktuatoren (3), die den Rädern der Vorderachse zugeordnet sind, als auch die Radbremsaktuatoren (3), die den Rädern der Hinterachse zugeordnet sind, abhängig von den Bremssignalen gesteuert werden, falls die Feststellbremsfunktion während der Fahrt aktiviert wird, und
**dass** nur die Radbremsaktuatoren (3), die den Rädern der Hinterachse zugeordnet sind, abhängig von den Bremssignalen gesteuert werden, falls die Feststellbremsfunktion während der Fahrt aktiviert wird und der Gradient der Betätigungskraft oder des Pedalwegs des Bremspedals (7) einen vorgegebenen Grenzwert überschreitet.

## Claims

1. Braking system for a motor vehicle, comprising
a pedal-value sensor (6) for generating electric braking signals as a function of applications of the brake pedal (7);
wheel brake actuators (3) assigned to the wheels and for generating a braking torque at the wheels;
a switching element (8) for activating a parking-brake function and
at least one control unit (5) for controlling the wheel brake actuators (3),
**characterized in that**
the at least one control unit (5) is designed to control at least the wheel brake actuators (3) assigned to the wheels on one of the axles of the motor vehicle as a function of the braking signals from the pedal-value sensor (6) if the parking-brake function is activated while the motor vehicle is in motion.

2. Braking system according to claim 1, **characterized in that** the wheel brake actuators (3) are controlled according to a predetermined time function if the parking-brake function is activated while the motor vehicle is in motion and
the brake application force and/or pedal travel at the brake pedal (7) does not exceed a predetermined brake application limit value.

3. Braking system according to claim 1, **characterized in that** the wheel brake actuators (3) are controlled such that the braking torque at the wheels is proportional to the brake application force and/or pedal travel of the brake pedal (7) if the parking-brake function is activated while the motor vehicle is in motion and
the brake application force and/or pedal travel at the brake pedal (7) exceeds a predetermined brake application limit value.

4. Braking system according to claim 1, **characterized in that** the wheel brake actuators (3) are controlled such that the setpoint braking torque transmitted from the at least one control unit (5) to the wheel brake actuators (3) in the form of control signals is dependent on the brake application force and/or pedal travel of the brake pedal (7) in the form of a hysteresis curve if
the parking-brake function is activated while the motor vehicle is in motion and the brake application force and/or pedal travel at the brake pedal (7) reaches or exceeds a predetermined brake application limit value.

5. Braking system according to any one of the preceding claims, **characterized in that** time characteristics of applications of the brake pedal (7) are analyzed by the at least one control unit (5).

6. Braking system according to claim 5, **characterized in that** said braking system has an anti-lock system, wherein said anti-lock system is disabled if the gradient of the brake application force or pedal travel of the brake pedal (7) exceeds a predetermined limit value.

7. Braking system according to claim 5 or 6, **characterized in that**
both the wheel brake actuators (3) assigned to the wheels of the front axle and also the wheel brake actuators (3) assigned to the wheels of the rear axle are controlled as a function of the braking signals if the parking-brake function is activated while the motor vehicle is in motion, and
only the wheel brake actuators (3) assigned to the wheels of the rear axle are controlled as a function of the braking signals if the parking-brake function is activated while the motor vehicle is in motion and the gradient of the brake application force or pedal travel of the brake pedal (7) exceeds a predetermined limit value.

## Revendications

1. Système de freinage pour un véhicule automobile, comprenant
un indicateur (6) de valeurs de pédale, pour la génération de signaux électriques de freinage en fonction de manoeuvres de la pédale de freinage (7),
des actionneurs (3) de freins de roues, associés aux roues en vue du développement d'un couple de freinage agissant sur lesdites roues,
un élément d'enclenchement (8) en vue de l'activation d'une fonction de frein d'immobilisation, et
au moins un appareil de commande (5) en vue du pilotage des actionneurs (3) de freins de roues,
**caractérisé par le fait que**
l'appareil de commande (5) prévu au minimum est déconnecté pour piloter au moins les actionneurs (3) de freins de roues associés aux roues sur l'un des essieux du véhicule automobile, en fonction des signaux de freinage de l'indicateur (6) de valeurs de pédale, pour le cas où la fonction de frein d'immobilisation est activée au cours du déplacement.

2. Système de freinage selon la revendication 1, **caractérisé par le fait que** les actionneurs (3) de freins de roues sont pilotés, d'après une fonction temporelle préétablie, pour le cas où
la fonction de frein d'immobilisation est activée au cours du déplacement, et
la force de manoeuvre appliquée à la pédale de freinage (7), et/ou la course de ladite pédale, n'excède pas une valeur limite de manoeuvre préétablie.

3. Système de freinage selon la revendication 1, **caractérisé par le fait que** les actionneurs (3) de freins de roues sont pilotés de façon telle que le couple de freinage agissant sur les roues soit proportionnel à la force de manoeuvre appliquée à la pédale de freinage (7), et/ou à la course de ladite pédale, pour le cas où
la fonction de frein d'immobilisation est activée au cours du déplacement,
la force de manoeuvre appliquée à la pédale de freinage (7), et/ou la course de ladite pédale, excède une valeur limite de manoeuvre préétablie.

4. Système de freinage selon la revendication 1, **caractérisé par le fait que** les actionneurs (3) de freins de roues sont pilotés de façon telle que le couple de freinage de consigne transmis auxdits actionneurs (3) de freins de roues par l'appareil de commande (5) prévu au minimum, sous la forme de signaux de commande, dépende de la force de manoeuvre appliquée à la pédale de freinage (7) et/ou de la course de ladite pédale, sous la forme d'une courbe d'hystérésis, pour le cas où
la fonction de frein d'immobilisation est activée au cours du déplacement, et
la force de manoeuvre appliquée à la pédale de freinage (7), et/ou la course de ladite pédale, atteint ou excède une valeur limite de manoeuvre préétablie.

5. Système de freinage selon l'une des revendications précédentes,
**caractérisé par le fait que** des allures temporelles de manoeuvres de la pédale de freinage (7) sont analysées par l'appareil de commande (5) prévu au minimum.

6. Système de freinage selon la revendication 5, **caractérisé par le fait qu'**il comporte un système antiblocage mis hors fonction lorsque le gradient de la force de manoeuvre, ou de la course de la pédale de freinage (7), excède une valeur limite préétablie.

7. Système de freinage selon la revendication 5 ou 6, **caractérisé**
**par le fait qu'**à la fois les actionneurs (3) de freins de roues associés aux roues de l'essieu avant, et les actionneurs (3) de freins de roues associés aux roues de l'essieu arrière, sont pilotés en fonction des signaux de freinage pour le cas où la fonction de frein d'immobilisation est activée au cours du déplacement ; et
**par le fait que** seuls les actionneurs (3) de freins de roues associés aux roues de l'essieu arrière sont pilotés, en fonction des signaux de freinage, pour le cas où la fonction de frein d'immobilisation est activée au cours du déplacement et le gradient de la force de manoeuvre, ou de la course de la pédale de freinage (7), excède une valeur limite préétablie.
